# EUROPÄISCHE PATENTSCHRIFT

(11) **EP 1 241 749 B1**
(45) Veröffentlichungstag und Bekanntmachung des Hinweises auf die Patenterteilung: **06.12.2006**
(21) Anmeldenummer: 02100208.4
(22) Anmeldetag: 01.03.2002
(51) Int. Cl.: H01S 3/094, H01S 3/30

(54) **Pumpquelle mit erhöhter Pumpleistung zur optischen breitbandigen Raman-Verstärkung**
Pump source with increased power for broadband optical Raman amplification
Source de pompage optique à puissance élevé pour amplification du type Raman à bande large

(30) Priorität: 16.03.2001 DE 10112806
(43) Veröffentlichungstag der Anmeldung: 18.09.2002
(73) Patentinhaber: SIEMENS AKTIENGESELLSCHAFT, 80333 München (DE)
(72) Erfinder: Krummrich, Peter, 81379, München (DE)

(56) Entgegenhaltungen:
- EP-A- 0 139 081
- EP-A- 0 984 532
- WO-A-00/49721

## Beschreibung

Die Erfindung betrifft eine Pumpquelle mit erhöhter Pumpleistung zur optischen breitbandigen Raman-Verstärkung eines Wellenlängen-Multiplex-(WDM-)Signals (S) nach dem Oberbegriff des Patentanspruchs 1.

Für eine weite Übertragung eines WDM-Signals sind Zwischenverstärker entlang der optischen Übertragungsstrecke erforderlich. Für eine breitbandige Verstärkung müssen Raman-Verstärker mit mehreren Pumplasern einen hohen Gewinn und ein flaches Gewinnspektrum für die Kanäle des WDM-Signals im L- und C-Band aufweisen. Dafür werden Pumpquellen mit mehreren Pumplasern mit unterschiedlichen Ausgangswellenlängen benötigt. Die Wellenlängen und die Ausgangsleistungen der Pumplaser müssen optimal gewählt werden.

Ein solcher Raman-Verstärker ist beispielsweise in der älteren Patentanmeldung mit dem Aktenzeichen P 10048460.3 beschrieben, bei dem von mehreren Pumplasern erzeugte Pumpsignale mit unterschiedlichen Pumpwellenlängen kontradirektional in die Übertragungsfaser eingespeist werden, damit ein WDM-Signal durch stimulierte Raman-Streuung verstärkt wird. Die Leistungen der Pumplaser werden so gewählt und die Pumpwellenlängen so angeordnet, daß alle Kanäle des WDM-Signals einen flachen Verlauf des Signal-Rauschabstandes -oder OSNRam Übertragungsfaserende aufweisen. Zusätzlich wird ein Filter (F) zur Angleichung aller Kanalpegel am Ausgang des Raman-Verstärkers angeschlossen, damit der Pegelverlauf aller Kanäle ebenfalls flach wird. Dadurch weisen alle Kanäle eines WDM-Signals den gleichen Signal-Rauschabstand und gleiche Pegel am Faserende auf.

Für die in der Praxis relevanten Gewinnwerte von etwa 10 dB bis 20 dB sind Ausgangsleistungen der Pumplaser von mehreren 100 mW erforderlich. Zur Erzeugung solcher hohen Pumpleistungen sind bislang zwei wesentliche Technologien bekannt. Die erste Technologie basiert auf einem leistungsfähigen Raman-Kaskadenlaser, der eine Zeile von kostengünstigen Laserdioden mit Ausgangswellenlängen um 920 nm und einen mit einem Element aus der Gruppe der seltenen Erden dotierten Faserlaser aufweist. Das Ausgangssignal der Laserdioden-Zeile wird in den äußeren, mehrmodig führenden Kern der aktiven Faser des Ytterbium- oder Neodym- dotierten Faserlasers eingespeist. Dieser erzeugt ein transversal einmodiges Ausgangssignal im Wellenlängenbereich um ca. 1100 nm bzw. 1064 nm. Zur Umsetzung des Signals in dem zum Pumpen des Raman-Verstärkers gewünschten Wellenlängenbereich um ca. 1450 nm wird zusätzlich das Signal in einem Raman-Kaskadenlaser mit Fasergittern und effizienter Verstärkerfaser in mehreren Stufen umgewandelt. Hohe Ausgangsleistungen weit über 1 Watt lassen sich dadurch erzeugen. Das Ausgangssignal des Raman-Kaskadenlasers weist jedoch eine geringe spektrale Breite auf und eignet sich damit alleine nicht als Pumpe eines breitbandigen Raman-Verstärkers.

Bei der zweiten Technologie wird eine sogenannte Einmoden-WDM-Pumpquelle mit bei unterschiedlichen Wellenlängen (von ca. 1400 nm bis 1500 nm) emittierenden Laserdioden verwendet, die ein transversal einmodiges Ausgangssignal abgeben. Zur Stabilisierung auf die jeweils gewünschte Pumpwellenlänge ist in der Ausgangsfaser der einzelnen Laserdioden ein Fasergitter vorgesehen. Ein wellenlängenselektiver WDM-Multiplexer fasst dann alle Pumpsignale zusammen. Die Pumpwellenlängen und die Pumpleistungen der einzelnen Laserdioden werden so gewählt, dass der Raman-Verstärker ein flaches an/aus-Gewinnspektrum aufweist. Der Nachteil dieser Technologie besteht darin, dass sehr leistungsfähige und daher teuere Laserdioden eingesetzt werden müssen, da hohe Leistungen bei den einzelnen Pumpwellenlängen erforderlich sind. Bei Bedarf müssen sogar statt einer Laserdiode zwei Laserdioden verwendet werden, deren Pumpsignale mit identischen Wellenlängen mittels eines Polarisations-Multiplexers zusammengefaßt werden. Da mehrere sehr leistungsstarke und relativ teuere transversal einmodige Laserdioden benötigt werden, ist diese Technologie mit hohen Kosten verbunden.

Die Aufgabe der vorliegenden Erfindung besteht also darin, eine Pumpquelle mit hoher breitbandiger Ausgangsleistung zur Raman-Verstärkung eines WDM-Signals anzugeben, bei der auf die Verwendung teuerer Laserdioden verzichtet werden kann.

Erfindungsgemäß wird diese Aufgabe durch eine Pumpquelle gelöst, die durch die Merkmale des Anspruchs 1 gekennzeichnet ist.

Zweckmäßige Weiterbildungen werden in den abhängigen Ansprüchen beschrieben.

Grundgedanke der erfindungsgemäß ausgebildeten Pumpquelle ist die Kombination einerseits wenigstens eines leistungsstarken Lasers, insbesondere eines Raman-Kaskadenlasers, mit andererseits mehreren Einmoden-Laserdioden geringer Ausgangsleistung. Vorteilhaft ist dabei insbesondere die Verwendung von leistungsschwachen und damit kostengünstigen Pumplasern für die Einmoden-Laserdioden und sehr leistungsstarken transversal mehrmodigen und deshalb auch kostengünstigen Lasern für den Raman-Kaskadenlaser.

Durch die Übertragung des Ausgangssignals des Kaskadenlasers und aller Ausgangssignale der Einmoden-Laserdioden über eine Konversionsfaser werden die Pumpsignale der Einmoden-Laserdioden eine Raman-Verstärkung erfahren und können dann als Pumpsignale zur Raman-Verstärkung der zu übertragenden WDM-Signale dienen. Dadurch werden die ursprünglich geringen Ausgangsleistungen der Einmoden-Laserdioden effizient erhöht.

Mehrere Anordnungen der erfindungsgemäßen Pumpquelle sind möglich, die mit geringen Ausgangsleistungen der einmodigen Laserdioden auskommen und trotzdem die hohen Pumpleistungen erzeugen können, die für ein flaches Gewinnspektrum im Wellenlängenbereich der WDM-Signale benötigt werden.

Eine Koppeleinrichtung zum Zusammenfassen der Pumpsignale bei den unterschiedlichen Pumpwellenlängen weist im Vergleich zur Anzahl der Pumpsignale eine größere Anzahl von Eingängen auf, so dass bei Raman-Verstärkung der Pumpsignale sowohl für kleine als auch für große Wellenlängenabstände zwischen Pumpsignalen des Kaskadenlasers und der Einmoden-Laserdioden die gewünschten Erhöhungen der Ausgangsleistungen für die Einmoden-Laserdioden erreicht werden.

Die Konversionsfaser der erfindungsgemäßen Pumpquelle kann mehrere in Reihe geschaltete Konversionsfaserabschnitte aufweisen. Die Pumpsignale der Einmoden-Laserdioden werden in unterschiedliche Konversionsfaserabschnitte je nach Wellenlängenabständen zwischen dem Pumpsignal des Kaskadenlasers und den weiteren zu verstärkten Pumpsignalen eingespeist. Eine Steigerung der niedrigen Raman-Verstärkung für die Pumpsignale mit kurzen Wellenlängen wird bei einer Übertragung über viele Konversionsfaserabschnitte erreicht. Einzelne Einmoden-Laserdioden oder verschiedene Module von Einmoden-Laserdioden können auch zwischen unterschiedlichen Konversionsfaserabschnitten eingekoppelt werden.

Zur Steigerung der Ausgangsleistungsverstärkung von Einmoden-Laserdioden mit kurzen Wellenlängen werden die leistungsschwachen Einmoden-Laserdioden mit absteigender Ausgangsleistung bei zunehmenden Wellenlängen verwendet. Dadurch wird die mit zunehmenden Wellenlängenabständen zwischen den Pumpsignalen des Raman-Kaskadenlasers und denjenigen der Einmoden-Laser zunehmende Erhöhung der Ausgangsleistung durch Raman-Verstärkung berücksichtigt.

Ausführungsbeispiele der Erfindung werden anhand von Figuren näher beschrieben. Dabei zeigen:
- Figur 1:: eine erfindungsgemäße Pumpquelle mit einem periodischen Filter als Einkoppeleinrichtung in die Konversionsfaser,
- Figur 2:: eine erfindungsgemäße Pumpquelle mit getrennten Einkoppeleinrichtungen in die Konversionsfaser,
- Figur 3:: eine erfindungsgemäße Pumpquelle mit Aufteilung der Konversionsfaser für eine einzige Einmoden-Laserdiode,
- Figur 4:: eine erfindungsgemäße Pumpquelle mit Aufteilung der Konversionsfaser für Ausgangssignale von mehreren Einmoden-Laserdioden,

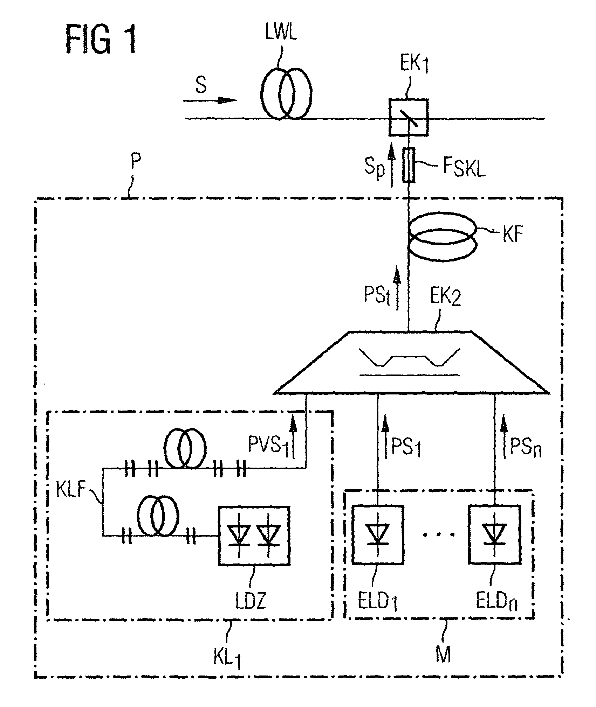

Bei dem in Figur 1 dargestellten Ausführungsbeispiel wird ein über eine Konversionsfaser KF zugeführtes Pumpsignal S_{P} einer Pumpquelle P mittels einer ersten Einkoppeleinrichtung EK₁ in eine optische Faser LWL zur Raman-Verstärkung eines übertragenen WDM-Signals S eingespeist. Die Pumpquelle P weist einen Kaskadenlaser KL₁ und ein Modul M mit mehreren Einmoden-Laserdioden ELD₁, ELD₂,..., ELDₙ auf, deren jeweilige Pumpsignale, nämlich das Pumpsignal PVS₁ aus dem Kaskadenlaser KL₁ einerseits und die Pumpsignale PS₁, PS₂,..., PSₙ aus dem Modul andererseits, als Summen-Signal PSₜ zusammengefaßt werden. Dabei wird das die kürzeste Wellenlänge aufweisende Pumpsignal PVS₁ des Kaskadenlasers KL₁ mit den Pumpsignalen PS₁, PS₂,..., PSₙ aus dem Modul M in einer zweiten Einkoppeleinrichtung EK₂ zum Summen-Signal PSₜ zusammengefaßt. Das Pumpsignal PVS₁ wird nach Einspeisung der Ausgangssignale eines oder mehrerer Laser oder so genannten Laserdioden-Zeilen LDZ in eine aktive Faser KLF durch eine Raman-Verstärkung erzeugt.

Zur breitbandigen Raman-Verstärkung der Pumpsignale PS₁, PS₂,..., PSₙ können auch mehrere Kaskadenlaser KL₁, KL₂... mit entsprechenden Pumpsignalen PVS₁, PVS₂... verwendet werden. In diesem Beispiel und in folgenden Figuren wird aber nur ein Kaskadenlaser KL₁ dargestellt.

Dieses am Ausgang der zweiten Einkoppeleinrichtung EK₂ auftretende Summen-Signal PSₜ wird der dort angeschlossenen Konversionsfaser KF zugeführt, in der das Pumpsignal PVS₁ Leistung an die anderen, jeweils größere Wellenlängen aufweisenden Pumpsignale PS₁, PS₂,..., PSₙ abgibt. Die Konversionsfaser KF ermöglicht diesen Energietransfer durch stimulierte Raman Streuung und weist eine speziell hohe Raman-Effizienz durch ihren geringen Modenfelddurchmesser auf. Hohe Raman-Koeffizienten lassen sich bei Verwendung von Silikatglasfaser beispielsweise durch eine hohe Germanium-Dotierung des Kernes der Konversionsfaser KF erzielen. Diese Dotierung wird ebenso für die hohe Brechzahlindexdifferenz zwischen Kern- und Mantelglas benötigt, die zu einer großen numerischen Apertur, einer starken Wellenführung und damit zu einem kleinen Modenfelddurchmesser führt. Für die Konversionsfaser KF lassen sich auch andere Glassysteme mit hohen Raman-Koeffizienten verwenden.

Für die zweite Einkoppeleinrichtung EK₂ können wahlweise ein dielektrisches Filter - auch Interferenzfilter genannt - oder periodische Filterstrukturen wie beispielsweise Mach-Zehnder-Interferometer verwendet werden. Die Verwendung periodischer Filterstrukturen erfordert dabei eine äquidistante Anordnung der Pumpwellenlängen. In diesem Fall weist die zweitkürzeste Pumpwellenlänge der Einmoden-Laserdiode ELD₁ nur einen geringen Abstand zur kürzesten Wellenlänge des Kaskadenlasers KL₁ auf. Das Pumpsignal PS₁ erfährt daher eine kleine Raman-Verstärkung (siehe "Fiber-Optic Communication Systems", 2. Edition, Govind P. Agrawal, Seite 381, Figur 8.11). Weiterhin erfährt das Pumpsignal PS₂ eine höhere Raman-Verstärkung.

Entsprechendes gilt für die weiteren Pumpsignale PSᵢ (i>2). Aus diesem Grund muß z. B. die Einmoden-Laserdiode ELD₁ über eine höhere ursprüngliche Ausgangsleitung verfügen als die der weiteren Einmoden-Laserdiode ELD₂ mit größerem Wellenlängenabstand zum Pumpsignal PVS₁. Die Einmoden-Laserdioden werden deshalb so gewählt, dass sie bei zunehmenden Wellenlängen entsprechend geringere Ausgangsleistungen liefern.

Zur Steigerung der Ausgangsleistung bei der zweit kürzesten Wellenlänge kann für die zweite Einkoppeleinrichtung EK₂ ein periodisches Filter eingesetzt werden, das mehr Eingänge aufweist als Pumpsignale eingespeist werden. Das Pumpsignal PVS₁ wird am Eingang für die kürzeste Wellenlänge zugeführt, während die weiteren Pumpsignale PS₁, PS₂,..., PSₙ der Einmoden-Laserdioden den Eingängen für die größeren Wellenlängen zugeführt werden. Zwischen dem Eingang des Pumpsignals PVS₁ und den Eingängen der Pumpsignale PS₁, PS₂,..., PSₙ bleiben ein oder mehrere Eingänge unbelegt, was zu einem größerem Wellenlängenabstand zwischen der kürzesten Pumpwellenlänge und den benachbarten Pumpwellenlängen führt.
Zusätzlich kann zur Unterdrückung des Pumpsignals PVS₁ des Kaskadenlasers KL₁ am Ende der Konversionsfasers KF ein Filter F_{SKL} eingesetzt werden, wenn die Raman-Verstärkung des WDM-Signals S kein Pumpsignal PVS₁ erfordert und das Pumpsignal PVS₁ nicht in die Übertragungsfaser LWL eingekoppelt werden soll.

In einer ersten Realisierung des in Figur 1 dargestellten Ausführungsbeispiels weist die erfindungsgemäße Pumpquelle P einen Kaskadenlaser KF und sieben Einmoden-Laserdioden ELD₁, ELD₂,..., ELD₇ auf, die aus zwei Fabry-Perot-Lasern und fünf DFB-Lasern bestehen. Die Pumpquelle erzielt für eine Standard-Einmodenfaser im C- und L-Band eine gleichmäßige Raman-Verstärkung von etwa 10 dB. Der Kaskadenlaser KL₁ und die Einmoden-Laserdioden ELD₁, ELD₂,..., ELD₇ bei Wellenlängen von 1409 nm bzw. 1424 nm, 1438 nm, 1453 nm, 1467 nm, 1482 nm, 1497 nm und 1513 nm weisen Ausgangsleistungen von 31,2 dBm bzw. 22,3 dBm, 16,4 dBm, 13,9 dBm, 9,6 dBm, 0,5 dBm, -5 dBm, -5 dBm vor der Einkopplung in die Konversionsfaser KF und von 27,0 dBm bzw. 23,5 dBm, 20,2 dBm, 19,9 dBm, 18,8 dBm, 14,4 dBm, 14,1 dBm, 16,4 dBm am Ende der Konversionsfaser KF auf.

In einer zweiten Realisierung des Ausführungsbeispiels gemäß Figur 1 weist die Pumpquelle P einen Kaskadenlaser KF und vier DFB-Laser (Distributed-Feedback-Laser) als Einmoden-Laserdioden ELD₁, ELD₂,..., ELD₄ für eine im L-Band gleichmäßige Raman-Verstärkung von etwa 10 dB auf. Der Kaskadenlaser KL₁ und die Einmoden-Laserdioden ELD₁, ELD₂,..., ELD₄ bei Wellenlängen von 1404 nm bzw. 1453 nm, 1467 nm, 1482 nm und 1510 nm weisen Ausgangsleistungen von 33,0 dBm bzw. 13,3 dBm, 5,8 dBm, -5 dBm, 4 dBm vor der Einkopplung in die Konversionsfaser KF und von 23,1 dBm, 22,0 dBm, 20,0 dBm, 24,1 dBm am Ende der Konversionsfaser KF auf.

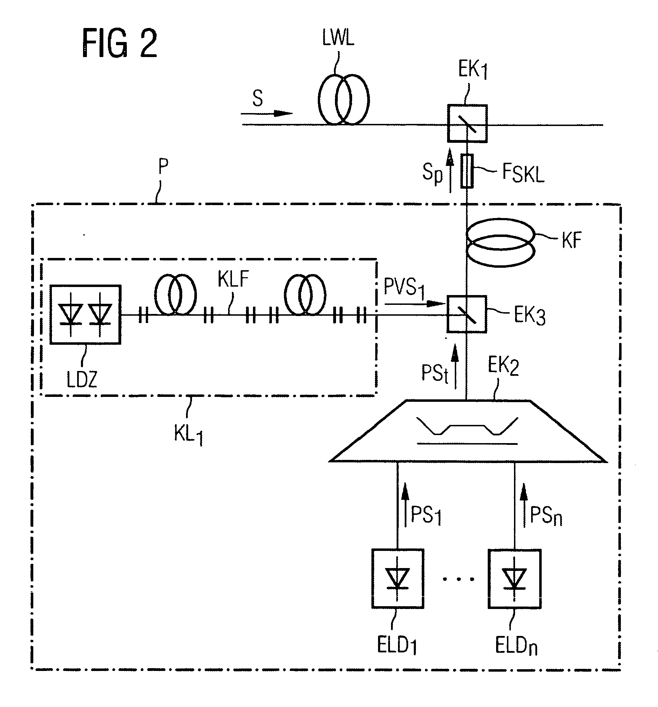

Figur 2 zeigt eine Alternative der erfindungsgemäßen Pumpquelle P, bei der das Pumpsignal PVS₁ des Kaskadenlasers KL₁ über eine dritte Einkoppeleinrichtung EK₃, die als WDM-Filter in Serie zur zweiten Einkoppeleinrichtung EK₂ gemäß Fig. 1 geschaltet ist, in die Konversionsfaser KF eingespeist wird. Die einzelnen Pumpsignale PS₁, PS₂,..., PSₙ können auch mit Hilfe einer als dielektrisches Filter ausgebildeten Einkoppeleinrichtung EK₂ zur Erzeugung des Summen-Signals PSₜ zusammengefaßt werden, was eine flexible Wahl der einzelnen Wellenlängen erlaubt.

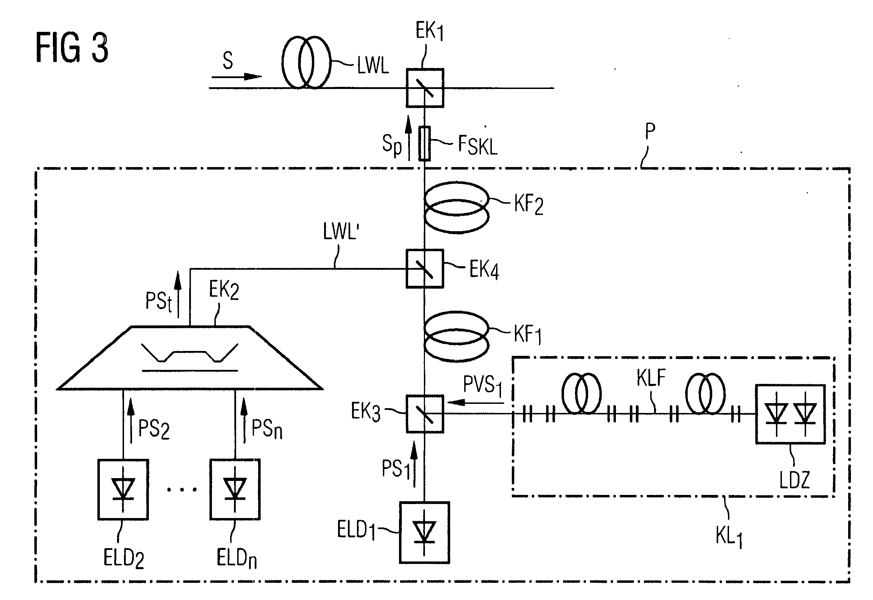

In Figur 3 wird eine weitere Möglichkeit zur Steigerung des Gewinns bei kleinem Wellenlängenabstand zwischen dem Pumpsignal PVS₁ und dem Pumpsignal PS₁ dargestellt. Dazu wird die Einmoden-Laserdiode ELD₁ von den anderen Einmoden-Laserdioden ELD₂, ..., ELDₙ mit höheren Wellenlängen getrennt und an den Eingang der Konversionfaser geschaltet. Dort wird auch das Pumpsignal PVS₁ über eine dritte Einkoppeleinrichtung EK₃ in die Konversionsfaser eingespeist. Diese Konversionsfaser ist hier, im Unterschied zur Konversionsfaser KF der Figur 2, in zwei in Reihe geschaltete Konversionsfaserabschnitte KF₁ und KF₂ aufgeteilt. Die Pumpsignale der übrigen Einmoden-Laserdioden ELD₂, ..., ELDₙ werden über die zweite Einkoppeleinrichtung EK₂ zum Summen-Signal PSₜ zusammengefaßt und als solches über eine optische Anschlußfaser LWL' und eine vierte Einkoppeleinrichtung EK₄ in den zweiten Konversionfaserabschnitt KF₂ eingespeist. Bei dieser Anordnung erfährt das Pumpsignal PS₁ eine Raman-Verstärkung über die beiden Konversionsfaserabschnitte KF₁ und KF₂. Im Gegensatz zum Pumpsignal PS₁ erfährt das Summen-Signal PSₜ aus den weiteren Pumpsignalen PS₂,..., PSₙ nur eine Raman-Verstärkung im Konversionsfaserabschnitt KF₂. Durch entsprechende Wahl der Längen der Konversionsfaserabschnitte KF₁ und KF₂ können also Raman-Verstärkungs-Differenzen zwischen dem ursprünglich leistungsschwachen Pumpsignal PS₁ und dem Summen-Signal PSₜ reduziert und/oder angepaßt werden.

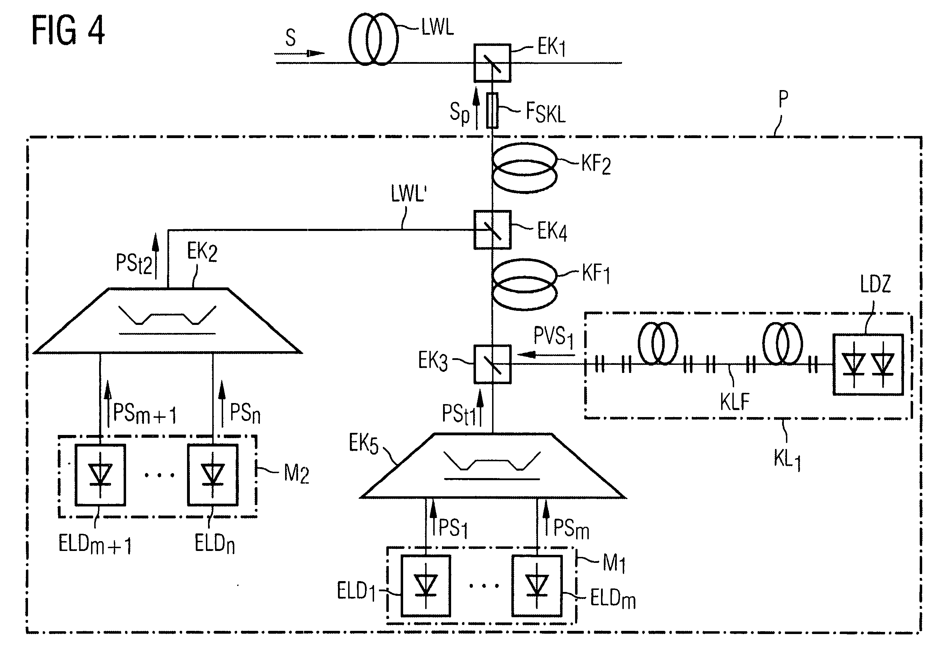

Bei der in Figur 4 dargestellten Schaltung wird aus der Gesamtzahl der Einmoden-Laserdioden ELD₁, ..., ELDₙ, im Gegensatz zur Anordnung gemäß Figur 3, nicht nur das Ausgangssignal einer einzigen Einmoden-Laserdiode ELD₁, sondern eine aus den Ausgangssignalen mehrerer Einmoden-Laserdioden ELD₁, ..., ELDₘ (n>m) bestehende erste Gruppe in einem ersten Modul M₁ abgetrennt, deren Pumpsignale PS₁, PS₂, ..., PSₘ dann über eine fünfte Einkoppeleinrichtung EK₅ zur Erzeugung eines ersten Summen-Signals PSₜ₁ in den ersten Konversionsfaserabschnitt KF₁, eingespeist werden. Die weiteren Pumpsignale PSₘ₊₁,..., PSₙ der einer zweiten Gruppe zugeordneten Einmoden-Laserdioden ELDₘ₊₁, ..., ELDₙ eines zweiten Moduls M₂ werden über die vierte Einkoppeleinrichtung EK₄ zur Erzeugung des zweiten Summen-Signals PSₜ₂ wiederum über die optische Anschlußfaser LWL' in den zweiten Konversionsfaserabschnitt KF₂ eingespeist. Durch die längere Übertragung in der Konversionsfaser erfährt das erste Summen-Signal PSₜ₁ eine ähnliche Raman-Verstärkung wie das zweite Summen-Signal PSₜ₂.

Weitere Varianten für erfindungsgemäß ausgebildete Pumpquellen P mit mehr als zwei in Serie geschalteten Konversionsfaserabschnitten KF₁, KF₂, ..., in die einzelne Pumpsignale PSᵢ (i=1...N) oder mehrere Summen-Signale PSₜ₁, PSₜ₂, ... aus mehreren Modulen M₁, M₂, ... mit Einmoden-Laserdioden eingespeist werden, sind realisierbar.

## Patentansprüche

1. Pumpquelle mit mehreren Pumplasern, deren Pumpsignale unterschiedliche Wellenlängen aufweisen und zur Raman-Verstärkung eines übertragenen breitbandigen Signals (S) in eine optische Faser (LWL) eingespeist werden,
**dadurch gekennzeichnet,**
**dass** eine Konversionsfaser (KF) vorgesehen ist, die über eine erste Einkoppeleinrichtung (EK₁) an die optische Faser (LWL) angeschlossen ist,
**dass** einer oder mehrere Pumplaser Pumpsignale (PS₁, PS₂, ...) in die Konversionsfaser (KF) einspeisen und dass einer oder mehrere Laser weitere Pumpsignale (PVS₁, PVS₂, ...) in die Konversionsfaser (KF) einspeisen, welche eine Raman-Verstärkung der Pumpsignale (PS₁, PS₂, ...) in der Konversionsfaser (KF) bewirken.

2. Pumpquelle nach Anspruch 1,
**dadurch gekennzeichnet,**
**dass** als Pumplaser Einmoden-Laserdioden (ELD₁, ELD₂, ...) verwendet sind, deren Pumpsignale (PS₁, PS₂, ...) jeweils eine geringe Ausgangsleistung aufweisen.

3. Pumpquelle nach Anspruch 1 oder 2,
**dadurch gekennzeichnet,**
**dass** der oder die Laser für die weiteren Pumpsignale (PVS₁, PVS₂, ...) als Raman-Kaskadenlaser (KL₁, KL₂,...) ausgebildet sind.

4. Pumpquelle nach Anspruch 3,
**dadurch gekennzeichnet,**
**dass** das/die Pumpsignal (e) (PVS₁, PVS₂, ...) des/der Kaskadenlaser(s) (KL₁, KL₂, ...) die kürzeste(n) Wellenlänge(n) der Pumpquelle aufweist/aufweisen.

5. Pumpquelle nach Anspruch 3 oder 4,
**dadurch gekennzeichnet,**
**daß** ein die Wellenlänge des jeweiligen Kaskadenlasers (KL₁, KL₂, ...) sperrendes Filter (F_{SKL}) vor der ersten Einkoppeleinrichtung (EK₁) der Pumpsignale in die optische Faser (LWL) vorgeschaltet ist.

6. Pumpquelle nach einem der Ansprüche 3 bis 5,
**dadurch gekennzeichnet,**
**daß** das Pumpsignal (PVSᵢ) des jeweiligen Kaskadenlasers (KLᵢ) (i>0) eine höhere Leistung als die jeweilige Leistung der Pumpsignale (PS₁, PS₂, ...) der Einmoden-Laserdioden (ELD₁, ELD₂, ...) aufweist.

7. Pumpquelle nach einem der vorgehenden Ansprüche,
**dadurch gekennzeichnet,**
**daß** als zweite Einkoppeleinrichtung (EK₂) ein periodischer Mach-Zehnder-Interferometer-Multiplexer zur Zusammenfassung der Pumpsignale (PVSᵢ; PS₁, PS₂, ...) in die Konversionsfaser (KF) vorgesehen ist.

8. Pumpquelle nach einem der Ansprüche 1 bis 6,
**dadurch gekennzeichnet,**
**daß** als zweite Einkoppeleinrichtung (EK₂) ein dielektrisches Filter zur Zusammenfassung der Pumpsignale (PVSᵢ; PS₁, PS₂, ...) in die Konversionsfaser (KF) vorgesehen ist und
**daß** die zweite Einkoppeleinrichtung (EK₂) mehr Eingänge als die Anzahl der Pumpsignale (PVSᵢ; PS₁, PS₂, ...) aufweist.

9. Pumpquelle nach Anspruch 7 oder 8,
**dadurch gekennzeichnet,**
**daß** die Pumpsignale (PVSᵢ) der Kaskadenlaser mit kürzesten Wellenlängen und die aus Pumplasern stammenden Pumpsignale (PS₁, PS₂, ...) mit weiteren, größeren Wellenlängen entsprechenden, Eingängen der zweiten Einkoppeleinrichtung (EK₂) derart zugeführt sind, daß der Wellenlängenabstand zwischen den Pumpsignalen (PVSᵢ) der Kaskadenlaser und dem benachbarten Pumpsignal (PS₁) vergrößert wird.

10. Pumpquelle nach einem der vorgehenden Ansprüche,
**dadurch gekennzeichnet,**
**daß** mehrere aus Pumplasern stammenden Pumpsignale (PS₁, PS₂, ...) zu Summen-Pumpsignalen (PSₜ, ...) zusammengefaßt werden.

11. Pumpquelle nach einem der vorgehenden Ansprüche,
**dadurch gekennzeichnet,**
**daß** die Konversionsfaser (KF) mehrere in Reihe geschaltete Konversionsfaserabschnitte (KF₁, KF₂, ...) aufweist,
**dass** die aus Pumplasern stammenden Pumpsignale (PS₁, PS₂, ..., PSₜ, ...) je nach ihrem Wellenlängenabstand zu Pumpsignalen (PVS₁, PVS₂, ...) der Kaskadenlaser (KL₁, KL₂, ...) in die unterschiedlichen Konversionsfaserabschnitte (KF₁, KF₂, ...) derart eingespeist werden, dass die Raman-Verstärkungen der Pumpsignale (PS₁, PS₂, ..., PSₜ, ...) in der Konversionsfaser wenigstens annähernd gleich groß ausfallen.

12. Pumpquelle nach einem der vorgehenden Ansprüche,
**dadurch gekennzeichnet,**
**dass** die Summen-Pumpsignale (PSₜ, ...) jeweils über Einkoppeleinrichtungen (EK₂, EK₅) in den jeweiligen Konversionsfaserabschnitt (KF₁, KF₂) eingespeist werden.

13. Pumpquelle nach einem der vorgehenden Ansprüche,
**dadurch gekennzeichnet,**
**dass** die Einmoden-Laserdioden (ELD₁, ELD₂, ...) mit zunehmenden Wellenlängen eine abnehmende Ausgangsleistung aufweisen, wodurch die mit zunehmenden Wellenlängenabständen zwischen den Pumpsignalen (PVS₁, PVS₂, ...) der Kaskadenlaser (KL₁, KL₂, ...) und den aus Pumplasern stammenden Pumpsignalen (PS₁, PS₂, ...) zunehmende Erhöhung der Ausgangsleistungen durch Raman-Verstärkung der Pumpsignale (PS₁, PS₂, ...) berücksichtigt wird.

14. Pumpquelle nach einem der vorgehenden Ansprüche,
**dadurch gekennzeichnet,**
**dass** wenigstens ein Kaskadenlaser (KLᵢ) einerseits sowie mindestens ein Fabry-Perot-Laser und/oder mindestens ein DFB-Laser andererseits, die jeweils als Einmoden-Laserdiode (ELDᵢ) ausgebildet sind, für eine gleichmäßige breitbandige Raman-Verstärkung des WDM-Signals (S) vorgesehen sind.

15. Pumpquelle nach Anspruch 14,
**dadurch gekennzeichnet,**
**dass** sich bei einem Kaskadenlaser (KL₁) und mehreren Einmoen-Laserdioden (ELD₁, ELD₂, ..., ELD₇) bei Wellenlängen von 1409 nm bzw. 1424 nm, 1438 nm, 1453 nm, 1467 nm, 1482 nm, 1497 nm und 1513 nm Ausgangsleistungen
von 31,2 dBm bzw. 22,3 dBm, 16,4 dBm, 13,9 dBm, 9,6 dBm, 0,5 dBm, -5 dBm, -5 dBm vor der Einkopplung in die Konversionsfaser (KF) und
von 27,0 dBm bzw. 23,5 dBm, 20,2 dBm, 19,9 dBm, 18,8 dBm, 14,4 dBm, 14,1 dBm, 16,4 dBm am Ende der Konversionsfaser (KF)
ergeben, die im L- und C-Band zu einer gleichmäßigen Raman-Verstärkung des WDM-Signals (S) von etwa 10 dB führen.

16. Pumpquelle nach Anspruch 14,
**dadurch gekennzeichnet,**
**daß** ein Kaskadenlaser (KL₁) und vier DFB-Laser als Einmoden-Laserdioden (ELD₁, ELD₂, ..., ELD₄) für eine im L-Band gleichmäßige Raman-Verstärkung des WDM-Signals (S) von etwa 10 dB vorgesehen sind, wobei der Kaskadenlaser (KL₁) und die Einmoden-Laserdioden (ELD₁, ELD₂, ..., ELD₄) bei Wellenlängen von 1404 nm bzw. 1453 nm, 1467 nm, 1482 nm und 1510 nm Ausgangsleistungen von 33,0 dBm bzw. 13,3 dBm, 5,8 dBm, - 5 dBm, 4 dBm vor der Einkopplung in die Konversionsfaser (KF) und von 23,1 dBm, 22,0 dBm, 20,0 dBm, 24,1 dBm für die Einmoden-Laserdioden (ELD₁, ELD₂, ..., ELD₄) am Ende der Konversionsfaser (KF) aufweisen.

## Claims

1. Pump source having a number of pump lasers, whose pump signals are at different wavelengths and are fed into an optical fibre (LWL) for Raman amplification of a transmitted broadband signal (S),
**characterized**
**in that** a conversion fibre (KF) is provided, which is connected via a first input coupling device (EK₁) to the optical fibre (LWL),
**in that** one or more pump lasers feed pump signals (PS₁, PS₂, ...) into the conversion fibre (KF), and in that one or more lasers feed further pump signals (PVS₁, PVS₂, ...) into the conversion fibre (KF), and these result in Raman amplification of Pump signals (PS₁, PS₂, ...) in the conversion fibre (KF).

2. Pump source according to Claim 1,
**characterized**
**in that** monomode laser diodes (ELD₁, ELD₂, ...) are used as Pump lasers, and their pump signals (PS₁, PS₂, ...) each have a small output power.

3. Pump source according to Claim 1 or 2,
**characterized**
**in that** the laser or lasers for the further pump signals (PVS₁, PVS₂, ...) is or are in the form of a Raman cascade laser or lasers (KL₁, KL₂, ...).

4. Pump source according to Claim 3,
**characterized**
**in that** Pump signal or signals (PVS₁, PVS₂, ...) of the cascade laser or lasers (KL₁, KL₂, ...) has/have the shortest wavelength or wavelengths of Pump source.

5. Pump source according to Claim 3 or 4,
**characterized**
**in that** a filter (F_{SKL}) which blocks the wavelength of the respective cascade laser (KL₁, KL₂, ...) is connected into the optical fibre (LWL) upstream of the first input coupling device (EK₁) for Pump signals.

6. Pump source according to one of Claims 3 to 5,
**characterized**
**in that** Pump signal (PVSᵢ) of the respective cascade laser (KLᵢ) (i>0) has a higher power than the respective power of Pump signals (PS₁, PS₂, ...) of the monomode laser diodes (ELD₁, ELD₂, ...).

7. Pump source according to one of the preceding claims,
**characterized**
**in that** a periodic Mach-Zehnder interferometer multiplexer is provided as a second input coupling device (EK₂) for combining Pump signals (PVSᵢ; PS₁, PS₂, ...) into the conversion fibre (KF).

8. Pump source according to one of Claims 1 to 6,
**characterized**
**in that** a dielectric filter is provided as the second input coupling device (EK₂) for combining Pump signals (PVSᵢ; PS₁, PS₂, ...) into the conversion fibre (KF), and
**in that** the second input coupling device (EK₂) has more inputs than the number of pump signals (PVSᵢ; PS₁, PS₂, ...).

9. Pump source according to Claim 7 or 8,
**characterized**
**in that** Pump signals (PVSᵢ) of the cascade lasers with the shortest wavelengths and those pump signals (PS₁, PS₂, ...) which originate from pump lasers and have further inputs which correspond to longer wavelengths are supplied to the second input coupling device (EK₂) such that the wavelength separation between Pump signals (PVSᵢ) of the cascade lasers and the adjacent pump signal (PS₁) is increased.

10. Pump source according to one of the preceding claims,
**characterized**
**in that** a number of pump signals (PS₁, PS₂, ...) which originate from pump lasers are combined to form sum pump signals (PSₜ, ...).

11. Pump source according to one of the preceding claims,
**characterized**
**in that** the conversion fibre (KF) has a number of series-connected conversion fibre sections (KF₁, KF₂, ...),
**in that** Pump signals (PS₁, PS₂, ..., PSₜ, ...) which originate from pump lasers are fed, depending on their wavelength separation from pump signals (PVS₁, PVS₂, ...) of the cascade lasers (KL₁, KL₂, ...), into the various conversion fibre sections (KF₁, KF₂, ...) such that the Raman gains of Pump signals (PS₁, PS₂, ..., PSₜ, ...) in the conversion fibre are at least approximately of the same magnitude.

12. Pump source according to one of the preceding claims,
**characterized**
**in that** the sum pump signals (PSₜ, ...) are each fed via input coupling devices (EK₂, EK₅) into the respective conversion fibre section (KF₁, KF₂).

13. Pump source according to one of the preceding claims,
**characterized**
**in that** the output power of the monomode laser diodes (ELD₁, ELD₂, ...) decreases as the wavelengths increase, as a result of which the increase in the output power levels, which increases with increasing wavelength separations between Pump signals (PVS₁, PVS₂, ...) of the cascade lasers (KL₁, KL₂, ...) and Pump signals (PS₁, PS₂, ...) which originate from Pump lasers, is taken into account by Raman amplification of Pump signals (PS₁, PS₂, ...) .

14. Pump source according to one of the preceding claims,
**characterized**
**in that** at least one cascade laser (KLᵢ) on the one hand and at least one Fabry-Perot laser and/or at least one DFB laser on the other hand, which are each in the form of monomode laser diodes (EL-Dᵢ), are provided for uniform broadband Raman amplification of the WDM signal (S).

15. Pump source according to Claim 14,
**characterized**
**in that** a cascade laser (KL₁) and a number of monomode laser diodes (ELD₁, ELD₂, ..., ELD₇) at wavelengths of 1409 nm or 1424 nm, 1438 nm, 1453 nm, 1467 nm, 1482 nm, 1497 nm and 1513 nm result in output powers of 31.2 dBm or 22.3 dBm, 16.4 dBm, 13.9 dBm, 9.6 dBm, 0.5 dBm, -5 dBm, -5 dBm before being coupled into the conversion fibre (KF), and
of 27.0 dBm or 23.5 dBm, 20.2 dBm, 19.9 dBm, 18.8 dBm, 14.4 dBm, 14.1 dBm, 16.4 dBm at the end of the conversion fibre (KF)
which lead to uniform Raman amplification of the WDM signal (S) of about 10 dB in L band and in C band.

16. Pump source according to Claim 14,
**characterized**
**in that** a cascade laser (KL₁) and four DFB lasers as monomode laser diodes (ELD₁, ELD₂, ..., ELD₄) are provided for uniform Raman amplification of the WDM signal (S) of about 10 dB in L band, with the cascade laser (KL₁) and the monomode laser diodes (ELD₁, ELD₂, ..., ELD₄), at wavelengths of 1404 nm or 1453 nm, 1467 nm, 1482 nm and 1510 nm having output powers of 33.0 dBm or 13.3 dBm, 5.8 dBm, -5 dBm, 4 dBm before being coupled into the conversion fibre (KF), and of 23.1 dBm, 22.0 dBm, 20.0 dBm, 24.1 dBm for the monomode laser diodes (ELD₁, ELD₂, ..., ELD₄) at the end of the conversion fibre (KF).

## Revendications

1. Source de pompage comprenant plusieurs lasers de pompage dont les signaux de pompage ont des longueurs d'onde différentes et sont injectés dans une fibre optique (LWL) en vue de l'amplification Raman d'un signal à large bande transmis (S),
**caractérisée en ce que**
il est prévu une fibre de conversion (KF) qui est connectée à la fibre optique (LWL) par le biais d'un premier dispositif de d'injection (EK₁),
**en ce qu'**un ou plusieurs lasers de pompage injectent des signaux de pompage (PS₁, PS₂, ...) dans la fibre de conversion (KF) et **en ce qu'**un ou plusieurs lasers injectent d'autres signaux de pompage (PVS₁, PVS₂, ...) dans la fibre de conversion (KF), lesquels donnent lieu à une amplification Raman des signaux de pompage (PS₁, PS₂, ...) dans la fibre de conversion (KF).

2. Source de pompage selon la revendication 1,
**caractérisée en ce que**
il est utilisé comme lasers de pompage des diodes laser unimodales (ELD₁, ELD₂, ...) dont les signaux de pompage (PS₁, PS₂, ...) présentent chacun une faible puissance de sortie.

3. Source de pompage selon la revendication 1 ou 2,
**caractérisée en ce que**
le ou les lasers pour les autres signaux de pompage (PVS₁, PVS₂, ...) sont réalisés comme lasers à cascade Raman (KL₁, KL₂, ...).

4. Source de pompage selon la revendication 3,
**caractérisée en ce que**
le ou les signaux de pompage (PVS₁, PVS₂, ...) du ou des lasers à cascade (KL₁, KL₂, ...) présentent la ou les longueurs d'onde les plus courtes de la source de pompage.

5. Source de pompage selon la revendication 3 ou 4,
**caractérisée en ce que**
un filtre (F_{SKL}) bloquant la longueur d'onde du laser à cascade respectif (KL₁, KL₂, ...) est monté en amont du premier dispositif d'injection (EK₁) des signaux de pompage dans la fibre optique (LWL).

6. Source de pompage selon l'une des revendications 3 à 5,
**caractérisée en ce que**
le signal de pompage (PVSᵢ) du laser à cascade respectif (KLᵢ) (i>0) présente une puissance plus élevée que la puissance respective des signaux de pompage (PS₁, PS₂, ...) des diodes laser unimodales (ELD₁, ELD₂, ...).

7. Source de pompage selon l'une des revendications précédentes,
**caractérisée en ce que**
il est prévu comme deuxième dispositif d'injection (EK₂) un multiplexeur-interféromètre périodique de Mach-Zehnder pour réunir les signaux de pompage (PVSᵢ ; PS₁, PS₂, ...) dans la fibre de conversion (KF).

8. Source de pompage selon l'une des revendications 1 à 6,
**caractérisée en ce que**
il est prévu comme deuxième dispositif d'injection (EK₂) un filtre diélectrique pour réunir les signaux de pompage (PVSᵢ ; PS₁, PS₂, ...) dans la fibre de conversion (KF), et
**en ce que** le deuxième dispositif d'injection (EK₂) présente un plus grand nombre d'entrées que le nombre des signaux de pompage (PVSᵢ ; PS₁, PS₂, ...).

9. Source de pompage selon la revendication 7 ou 8,
**caractérisée en ce que**
les signaux de pompage (PVSᵢ) des lasers à cascade, ayant les longueurs d'onde les plus courtes et les signaux de pompage (PS₁, PS₂, ...) issus de lasers de pompage, ayant d'autres longueurs d'onde plus grandes sont amenés à des entrées correspondantes du deuxième dispositif d'injection (EK₂), de manière à augmenter l'écartement des longueurs d'onde entre les signaux de pompage (PVSᵢ) des lasers à cascade et le signal de pompage voisin (PS₁).

10. Source de pompage selon l'une des revendications précédentes,
**caractérisée en ce que**
plusieurs signaux de pompage (PS₁, PS₂, ...) issus de lasers de pompage, sont réunis en signaux de pompage cumulés (PSₜ, ...).

11. Source de pompage selon l'une des revendications précédentes,
**caractérisée en ce que**
la fibre de conversion (KF) comprend plusieurs tronçons de fibre de conversion (KF₁, KF₂, ...) montés en série,
**en ce que** les signaux de pompage (PS₁, PS₂, ..., PSₜ, ... ) issus de lasers de pompage sont injectés dans les différents tronçons de fibre de conversion (KF₁, KF₂, ...), en fonction de leur écartement des longueurs d'onde par rapport aux signaux de pompage (PVS₁, PVS₂, ...) des lasers à cascade (KL₁, KL₂, ...), de manière à ce que les amplifications Raman des signaux de pompage (PS₁, PS₂, ..., PSₜ, ... ) dans la fibre de conversion soient au moins approximativement identiques.

12. Source de pompage selon l'une des revendications précédentes,
**caractérisée en ce que**
les signaux de pompage cumulés (PSₜ, ...) sont injectés chacun par le biais de dispositifs d'injection (EK₂, EK₅) dans le tronçon de fibre de conversion respectif (KF₁, KF₂).

13. Source de pompage selon l'une des revendications précédentes,
**caractérisée en ce que**
les diodes laser unimodales (ELD₁, ELD₂, ...) présentent une puissance de sortie diminuant avec l'augmentation des longueurs d'onde, ce qui permet de prendre en compte l'accroissement des puissances de sortie, qui augmente avec l'augmentation des écartements des longueurs d'onde entre les signaux de pompage (PVS₁, PVS₂, ...) des lasers à cascade (KL₁, KL₂, ...) et les signaux de pompage (PS₁, PS₂, ...) issus de lasers de pompage, par amplification Raman desdits signaux de pompage (PS₁, PS₂, ...).

14. Source de pompage selon l'une des revendications précédentes,
**caractérisée en ce que**
au moins un laser à cascade (KLᵢ) d'une part ainsi qu'au moins un laser de Fabry-Pérot et/ou au moins un laser DFB d'autre part, qui sont réalisés chacun comme diode laser unimodale (ELDᵢ), sont prévus pour une amplification Raman à large bande uniforme du signal WDM (S).

15. Source de pompage selon la revendication 14,
**caractérisée en ce que**
on obtient dans le cas d'un laser à cascade (KL₁) et de plusieurs diodes laser unimodales (ELD₁, ELD₂, ..., ELD₇), avec des longueurs d'onde de 1409 nm resp. 1424 nm, 1438 nm, 1453 nm, 1467 nm, 1482 nm, 1497 nm et 1513 nm, des puissances de sortie
de 31, 2 dBm resp. 22, 3 dBm, 16, 4 dBm, 13, 9 dBm, 9, 6 dBm, 0, 5 dBm, -5 dBm, -5 dBm avant l'injection dans la fibre de conversion (KF) et
de 27,0 dBm resp. 23,5 dBm, 20,2 dBm, 19,9 dBm, 18,8 dBm, 14,4 dBm, 14,1 dBm, 16,4 dBm à la fin de la fibre de conversion (KF),
qui conduisent dans la bande L et C à une amplification Raman uniforme du signal WDM (S) de l'ordre de 10 dB.

16. Source de pompage selon la revendication 14,
**caractérisée en ce que**
un laser à cascade (KL₁) et quatre lasers DFB comme diodes laser unimodales (ELD₁, ELD₂, ..., ELD₄) sont prévus pour une amplification Raman uniforme dans la bande L du signal WDM (S) de l'ordre de 10 dB, le laser à cascade (KL₁) et les diodes laser unimodales (ELD₁, ELD₂, ..., ELD₄) présentant avec des longueurs d'onde de 1404 nm resp. 1453 nm, 1467 nm, 1482 nm et 1510 nm des puissances de sortie de 33,0 dBm resp. 13,3 dBm, 5,8 dBm, -5 dBm, 4 dBm avant l'injection dans la fibre de conversion (KF) et de 23,1 dBm, 22,0 dBm, 20,0 dBm, 24,1 dBm pour les diodes laser unimodales (ELD₁, ELD₂, ..., ELD₄) à la fin de la fibre de conversion (KF).
